# EUROPÄISCHE PATENTSCHRIFT

(11) **EP 1 113 301 B1**
(45) Veröffentlichungstag und Bekanntmachung des Hinweises auf die Patenterteilung: **18.06.2008**
(21) Anmeldenummer: 00124485.4
(22) Anmeldetag: 09.11.2000
(51) Int. Cl.: G02B 21/00

(54) **Vorrichtung zur Strahlablenkung**
Apparatus for light beam deflection
Dispositif de déflection d'un faisceau de lumière

(30) Priorität: 24.11.1999 DE 19956439
(43) Veröffentlichungstag der Anmeldung: 04.07.2001
(73) Patentinhaber: Leica Microsystems CMS GmbH, 35578 Wetzlar (DE)
(72) Erfinder: Storz, Rafael, Dr., 69245 Bammental (DE); Engelhardt, Johann, Dr., 76669 Bad Schönborn (DE); Birk, Holger, Dr., 74909 Meckesheim (DE); Bradl, Joachim , Dr., 69198 Schriesheim (DE)
(74) Vertreter: Reichert, Werner Franz

(56) Entgegenhaltungen:
- EP-A- 0 202 105
- US-A- 5 225 923
- US-A- 5 334 991
- US-A- 5 914 479

## Beschreibung

Die vorliegende Erfindung betrifft eine Vorrichtung zur Strahlablenkung, insbesondere für die Rastermikroskopie, wobei ein Lichtstrahl von einer durch einen Drehantrieb alternierend drehbaren Spiegelanordnung ablenkbar ist.

Vorrichtungen der gattungsbildenden Art werden insbesondere in der Rastermikroskopie eingesetzt, insbesondere bei der konfokalen Laserscanning-Mikroskopie. Lediglich beispielhaft wird auf die DE 43 22 694 A1 hingewiesen, bei der ein Lichtstrahl mit Hilfe von mindestens drei Spiegeln mit jeweils einem eigenen Drehantrieb abgelenkt wird.

Aus der DE 196 54 210 A1 ist für sich gesehen eine optische Anordnung zum Scannen eines Strahls in zwei im wesentlichen senkrecht zueinander liegenden Achsen bekannt, die zwei drehangetriebene Spiegel aufweist, wobei einem der beiden Spiegel ein weiterer Spiegel in einer vorgegebenen Winkelposition drehfest zugeordnet ist.

Als mechanische Drehantriebe der aus dem Stand der Technik bekannten Spiegel bzw. Spiegelanordnungen werden meist herkömmlichen Galvanometer oder resonante Galvanometer verwendet. Galvanometer können über einen großen Frequenzbereich betrieben werden und sind daher bezüglich ihrer Einsatzmöglichkeiten vielseitig. Bei geeigneter Ansteuerung kann die Nullpunktlage des Galvanometers mit einem Winkel-Offset versehen werden, was einem konstanten Auslenken der Galvanometerachse entspricht. Diese Galvanometer sind jedoch aufgrund des großen Trägheitsmoments bezüglich ihrer maximal erreichbaren Schwenkungs- bzw. Schwingungsfrequenz nach oben auf einige hundert Hertz begrenzt. Weiterhin können, unter Umständen von der Schwingungsfrequenz abhängige, unerwünschte Abweichungen vom Ansteuersignal eines Galvanometers (Soll-Position) zur tatsächlich eingestellten Winkel- bzw. Drehposition des Spiegels (Ist-Position) auftreten.

Resonante Galvanometer hingegen weisen eine sehr hohe Schwenkungs- bzw. Schwingungsfrequenz auf, die Abweichung von der Soll-Position zur Ist-Position ist im allgemeinen geringer als bei herkömmlichen Galvanometern. Resonante Galvanometer können jedoch nur bei der entsprechenden Resonanzfrequenz betrieben werden, wodurch ein vielseitiger Einsatz nicht möglich ist. Weiterhin ist es mit resonanten Galvanometern nicht möglich, einen Winkel-Offset zur Nullpunktlage einzustellen.

Der vorliegenden Erfindung liegt daher die Aufgabe zugrunde, eine Vorrichtung zur Strahlablenkung anzugeben, die im Hinblick auf den Frequenzbereich und die maximal erzielbare Schwingungsfrequenz eine maximale Variabilität ermöglicht, um so flexible und vielseitige Einsatzmöglichkeiten zu ermöglichen. Darüber hinaus soll die Vorrichtung einen nahezu beliebigen Winkel-Offset zur Nullpunktlage einstellen können.

Die voranstehende Aufgabe wird durch die Merkmale des Patentanspruchs 1 gelöst. Danach ist eine Vorrichtung zur Strahablenkung, insbesondere für die Rastermikroskopie, dadurch gekennzeichnet, der Drehantrieb zwei, die Spiegelanordnung gemeinsam oder unabhängig voneinander um eine Drehachse drehenden, voneinander unabhängige Antriebseinheiten umfasst, und dass die zweite Antriebseinheit an der Achse der ersten Antriebseinheit befestigt ist, so dass die zweite Antriebseinheit von der ersten Antriebseinheit drehbar ist.

Erfindungsgemäß ist zunächst erkannt worden, dass resonante Galvanometer typischerweise hohe mechanische Güten aufweisen. Hierdurch ist bei einer alternierenden Drehung eines resonanten Galvanometers mit Schwingungsfrequenzen, die weit unterhalb der Resonanzfrequenz liegen, eine direkte Übertragung ohne Phasenverschiebung auf ein beispielsweise an dem resonanten Galvanometer befestigten Spiegel möglich.

Ein Drehantrieb, der zwei, voneinander unabhängige Antriebseinheiten umfasst, die charakteristischen Eigenschaften der beiden Antriebseinheiten vereinigt. Der Vorteil eines variablen und flexiblen Einsatzes der erfindungsgemäßen Vorrichtung überwiegt den Nachteil der Notwendigkeit von zwei Antriebseinheiten pro Drehachse.

Die beiden Antriebseinheiten könnten als Galvanometer oder als Schrittmotor ausgeführt sein. Die Kombination von einem Galvanometer mit einem Schrittmotor für die beiden Antriebseinheiten ist ebenfalls denkbar.

Die beiden Antriebseinheiten werden derart miteinander kombiniert, dass ihre Drehachsen im wesentlichen parallel zueinander sind. Insbesondere können die Antriebseinheiten derart kombiniert werden, dass ihre Drehachsen aufeinanderfallen bzw. im wesentlichen identisch sind.

Im Hinblick auf eine konkrete Ausführungsform ist die zweite Antriebseinheit an der Achse der ersten Antriebseinheit befestigt, so dass die zweite Antriebseinheit von der ersten Antriebseinheit drehbar ist. In diesem Fall könnte bspw. die erste Antriebseinheit ortsfest an einem Mikroskopgehäuse befestigt sein, so dass bei Betrieb der ersten Antriebseinheit deren Achse eine alternierende Drehung bzw. Schwenkung ausführt und die zweite Antriebseinheit dreht bzw. schwenkt. Die Achse der ersten Antriebseinheit könnte mit der zweiten Antriebseinheit entweder fest bzw. starr oder flexibel, bspw. über ein Getriebe verbunden sein.

Die Spiegelanordnung ist an der Achse der zweiten Antriebseinheit befestigt. Hierzu könnte die Spiegelanordnung entweder direkt an der Achse der zweiten Antriebseinheit angeklebt oder mit einer entsprechenden mechanischen Vorrichtung daran befestigt sein.

In einer bevorzugten Ausführungsform ist die zweite Antriebseinheit als ein resonantes Galvanometer ausgeführt. Beim Betrieb dieses resonanten Galvanometers ist dann eine Strahlablenkung nur mit einer Frequenz, nämlich mit der Resonanzfrequenz des resonanten Galvanometers möglich. Für den Fall, dass diese Resonanzfrequenz wesentlich über der maximal erzielbaren Schwingungsfrequenz der ersten Antriebseinheit liegt, erfolgt eine schnelle Strahlablenkung vorzugsweise mit der zweiten Antriebseinheit.

Im Hinblick auf eine präzise bzw. genaue Strahlablenkung und vor allem zur Vermeidung von Schwingungsübertragungen zwischen den beiden Antriebseinheiten kann es erforderlich sein, dass beim Betrieb der zweiten Antriebseinheit die Achse der ersten Antriebseinheit drehfest ist. Dies kann entweder durch entsprechende ansteuerungstechnische Maßnahmen der Antriebseinheiten selbst oder bspw. durch eine zusätzliche mechanische Vorrichtung erzielt werden. Letztendlich muß es möglich sein, dass beim alleinigen Betrieb der einen Antriebseinheit keine unerwünschte Relativbewegung zwischen den beiden Antriebseinheiten auftritt.

In einer weiteren Ausführungsform wird als erste Antriebseinheit ein Galvanometer oder ein Schrittmotor gewählt, mit dem vorzugsweise eine langsame Strahlablenkung erfolgt. Da das Galvanometer oder der Schrittmotor die zweite Antriebseinheit samt Spiegelanordnung aufgrund einer direkten oder indirekten Kopplung mit der ersten Antriebseinheit alternierend dreht, ist aufgrund des hohen Trägheitsmoments der zu bewegenden Elemente die Schwingungsfrequenz sowieso nach oben begrenzt.

Auch beim Betrieb der ersten Antriebseinheit kann es erforderlich sein, dass die Achse der zweiten Antriebseinheit drehfest ist. Letztendlich muß es möglich sein, dass beim alleinigen Betrieb der ersten Antriebseinheit deren altierende Drehung direkt und unmittelbar über die zweite Antriebseinheit auf die Spiegelanordnung übertragen wird.

Für den Fall, dass als erste Antriebseinheit ein Galvanometer oder ein Schrittmotor verwendet wird, kann mit der ersten Antriebseinheit ein Strahlablenkungs- bzw. Winkel-Offset eingestellt werden. Dies kann mit Hilfe der Ansteuereinheit des Galvanometers oder des Schrittmotors in der üblichen Weise erfolgen, dass dem Galvanometer ein anderer Offset-Strom zur Verfügung gestellt wird bzw. die Achse des Schrittmotors in die entsprechende Winkelposition gefahren werden.

In besonders vorteilhafter Weise könnte zur Ablenkung des Lichtstrahls in einer weiteren Ablenkrichtung der Spiegelanordnung eine zweite Spiegelanordnung vor- oder nachgeordnet sein, die mit einem zweiten Drehantrieb alternierend drehbar ist. Die Kombination der erfindungsgemäßen Vorrichtung zur Strahlablenkung mit einer weiteren Vorrichtung zur Strahlablenkung ermöglicht dann eine Strahablenkung in zwei voneinander unabhängige Richtungen. Ablenkungen in weiteren Ablenkrichtungen mit zusätzlichen Spiegelanordnungen wären ebenfalls denkbar.

Der Drehantrieb der zweiten Spiegelanordnung könnte seinerseits aus zwei, die zweite Spiegelanordnung gemeinsam oder unabhängig voneinander um eine Drehachse drehenden, voneinander unabhängige Antriebseinheiten umfassen, für die das bisher gesagte gilt. Der zweite Drehantrieb könnte auch lediglich als Galvanometer oder Schrittmotor ausgeführt sein. Insbesondere könnte der zweite Drehantrieb als resonantes Galvanometer ausgeführt sein.

In einer konkreten Ausführungsform sind die beiden Vorrichtungen zur Strahlablenkung derart angeordnet, dass die Ablenkrichtung der einen Spiegelanordnung im wesentlichen senkrecht zur Ablenkrichtung der zweiten Spiegelanordnung steht. Hierdurch ist insbesondere für die konfokale Laserscanning-Mikroskopie eine flächenförmige Rasterbewegung des zu scannenden Lichtstrahls möglich.

Beim Betrieb der beiden Vorrichtungen zur Strahlablenkung bzw. der beiden Spiegelanordnungen könnte die im Beleuchtungsstrahlengang als erste Spiegelanordnung angeordnete Vorrichtung zur Strahlablenkung eine langsame und die zweite im Beleuchtungsstrahlengang angeordnete Spiegelanordnung eine schnelle Strahlablenkung ausführen. Eine schnelle Strahlablenkung der ersten Spiegelanordnung in Verbindung mit einer langsamen Strahlablenkung der zweiten Spiegelanordnung kann ebenfalls zweckmäßig sein. Weiterhin ist es denkbar, dass beide Spiegelanordnungen jeweils eine langsame oder eine schnelle Strahlablenkung ausführen. Unter einer schnellen Strahlablenkung ist in diesem Zusammenhang eine Schwingungsfrequenz zu verstehen, die im Bereich von 100 Hz bis 10000 Hz liegt. Eine langsame Strahlablenkung liegt im Bereich von 0,1 Hz bis 800 Hz.

In einer bevorzugten Ausführungsform weist eine der beiden Spiegelanordnungen mindestens zwei Spiegel auf, die in einer gemeinsamen Halterung aufgenommen sind und die in einer vorgegebenen Winkelposition drehfest zueinander zugeordnet sind. Weiterhin ist denkbar, dass beide Spiegelanordnungen jeweils mindestens zwei Spiegel aufweisen, die in einer gemeinsamen Halterung aufgenommen sind. Ebenso ist es möglich, dass eine oder beide Spiegelanordnungen genau einen Spiegel aufweisen.

Zur Minimierung von Verzeichnungsfehlern könnte einer der beiden Spiegel als Paddle-Scanner angeordnet sein. Insbesondere könnte der im Beleuchtungsstrahlengang angeordnete erste Spiegel als Paddle-Scanner ausgeführt sein. Hierdurch wird näherungsweise die Drehung des Strahls um einen virtuellen Drehpunkt erreicht, was in vorteilhafter Weise die Verwendung von kleinen Spiegelflächen ermöglicht. Weiterhin können Verzeichnungsfehler, die durch die Strahlablenkung induziert werden, weitgehend minimiert werden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung von Ausführungsbeispielen der Erfindung anhand der Zeichnungen zu verweisen. In Verbindung mit der Erläuterung der bevorzugten Ausfüshrungsbeispiele anhand der Zeichnungen werden auch im allgemeinen bevorzugte Ausgestaltungen und Weiterbildungen der Lehre erläutert. In den Zeichnungen zeigt
Fig. 1 in einer schematischen Darstellung ein erstes Ausführungsbeispiel einer erfindungsgemäßen Vorrichtung zur Strahlablenkung,
Fig. 2 in einer schematischen Darstellung ein zweites Ausführungsbeispiel einer erfindungsgemäßen Vorrichtung zur Strahlablenkung.

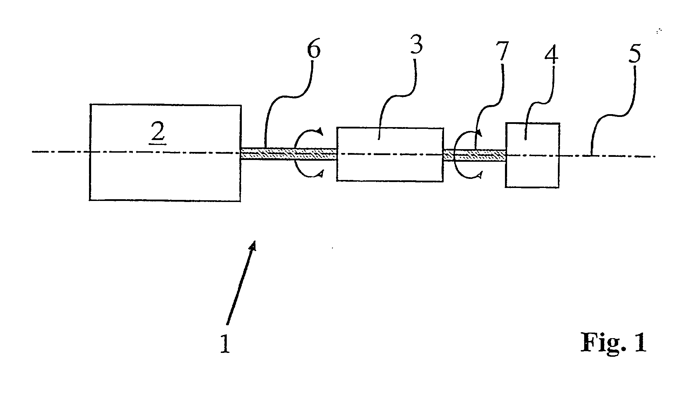

Fig. 1 zeigt eine Vorrichtung zur Strahlablenkung für die konfokale Laserscanning-Mikroskopie, bei der der Drehantrieb 1 zwei voneinander unabhängige Antriebseinheiten 2, 3 umfasst. Die beiden Antriebseinheiten 2, 3 drehen den Spiegel 4 gemeinsam oder unabhängig voneinander um eine Drehachse 5. Die beiden Antriebseinheiten 2, 3 sind als Galvanometer ausgeführt. Die Drehachsen der beiden Antriebseinheiten 2, 3 sind identisch, sie sind strichpunktiert mit dem Bezugszeichen 5 in Fig. 1 gezeigt.

An der Achse 6 der ersten Antriebseinheit 2 ist die zweite Antriebseinheit 3 befestigt. Die zweite Antriebseinheit 3 ist von der ersten Antriebseinheit 2 drehbar. Der Spiegel 4 ist an der Achse 7 der zweiten Antriebseinheit 3 befestigt. Die Antriebseinheit 3 ist als resonantes Galvanometer ausgeführt, mit dem eine schnelle Strahlablenkung erfolgt. Insbesondere ist sichergestellt, dass beim Betrieb des resonanten Galvanometers 3 die Achse 6 des Galvanometers 2 drehfest gehalten wird.

Eine langsame Strahlablenkung wird mit dem Galvanometer 2 realisiert, wobei sichergestellt ist, dass während des Betriebs des Galvanometers 2 die Achse 7 des resonanten Galvanometers 3 drehfest ist. Dies ist vor allem aufgrund der eingangs erwähnten hohen mechanischen Güte von resonanten Galvanometern gegeben, die Schwingungen in einem Frequenzbereich unterhalb deren Resonanzfrequenz direkt und ohne Phasenverschiebung auf den Spiegel 4 übertragen. Mit Galvanometer 2 kann ein Strahlablenkungs-Offset eingestellt werden, um diese neue Winkellage werden dann die alternierenden Drehbewegungen der Spiegelanordnung ausgeführt.

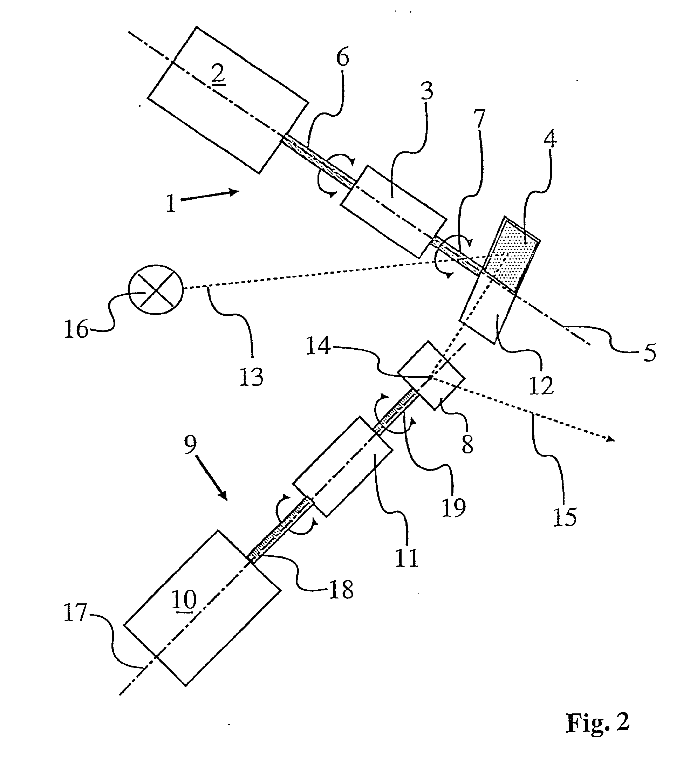

Fig. 2 zeigt neben der Vorrichtung zur Strahlablenkung aus Fig. 1 einen zweiten Spiegel 8, der von einem zweiten Drehantrieb 9 alternierend gedreht wird. Der Spiegel 8 ist im Beleuchtungsstrahlengang dem Spiegel 4 nachgeordnet, der vom zweiten Drehantrieb 9 alternierend gedrehte Spiegel 8 lenkt den Lichtstrahl in einer weiteren Richtung ab.

Der zweite Drehantrieb 9 umfasst ebenfalls ein Galvanometer 10 und ein resonantes Galvanometer 11, für den Spiegel 8 und den zweiten Drehantrieb 9 gilt das bisher gesagte entsprechend.

Die Ablenkrichtung des Spiegels 8 steht im wesentlichen senkrecht zur Ablenkrichtung des Spiegels 4. Spiegel 4 führt eine langsame, Spiegel 8 hingegen eine schnelle Strahlablenkung aus.

Bei einer schnellen Strahablenkung, die durch die resonanten Galvanometer 3, 11 durchgeführt werden können, handelt es sich um eine Strahlablenkungsfrequenz von 4000 Hz, der Resonanzfrequenz der beiden resonanten Galvanometer. Eine langsame Strahlablenkung der beiden Galvanometer 2, 10 kann mit einer Strahlablenkungsfrequenz von 10 bis 800 Hz erfolgen. In der Ausführungsform gemäß Fig. 2 ist ebenfalls vorgesehen, dass eine schnelle Strahlablenkung mit dem Spiegel 4 und eine langsame Strahlablenkung mit Spiegel 8 realisiert wird. Hierdurch kann in vorteilhafter Weise die "schnelle Scan- bzw. Aufnahmerichtung" vertauscht werden.

Zur Minimierung von Verzeichnungen bzw. um kleine Spiegel verwenden zu können, ist Spiegel 4 als Paddle-Scanner ausgeführt. Spiegel 4 besteht aus einer Grundplatte 12, die nur zu einem Teil verspiegelt ist. Grundplatte 4 ist bezüglich der Drehachse 5 symmetrisch auf der Achse 7 des resonanten Galvanometers 3 aufgeklebt. Der auf den Spiegel 4 auftreffende Lichtstrahl 13 wird unabhängig von der jeweiligen Winkelstellung des Spiegels 4 nahezu immer auf den gleichen Punkt 14 auf Spiegel 8 reflektiert, so dass der an beiden Spiegeln reflektierte Lichtstrahl 15 scheinbar um den virtuellen Drehpunkt 14 in zwei Richtungen dreht.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Drehantrieb
- 2: erste Antriebseinheit
- 3: zweite Antriebseinheit
- 4: Spiegel, Spiegelanordnung
- 5: Drehachse
- 6: Achse von (2)
- 7: Achse von (3)
- 8: zweiter Spiegel, zweite Spiegelanordnung
- 9: zweiter Drehantrieb
- 10: erste Antriebseinheit von (9)
- 11: zweite Antriebseinheit von (9)
- 12: Basisplatte von (4)
- 13: Lichtstrahl vor der Strahlablenkung
- 14: Auftreffpunkt des an (4) reflektierten Lichtstrahls auf (8)
- 15: in zwei Ablenkrichtungen abgelenkter Lichtstrahl
- 16: Lichtquelle
- 17: Drehachse von (9, 8)
- 18: Achse von (10)
- 19: Achse von (11)

## Patentansprüche

1. Vorrichtung zur Strahlablenkung, insbesondere für die Rastermikroskopie, wobei ein Lichtstrahl von einer durch einen Drehantrieb (1) alternierend drehbaren Spiegelanordnung (4) ablenkbar ist,
**dadurch gekennzeichnet, dass** der Drehantrieb (1) zwei, die Spiegelanordnung (4) gemeinsam oder unabhängig voneinander um eine Drehachse (5) drehenden, voneinander unabhängige Antriebseinheiten (2, 3) umfasst, und dass die zweite Antriebseinheit (3) an der Achse (6) der ersten Antriebseinheit (2) befestigt ist, so dass die zweite Antriebseinheit (3) von der ersten Antriebseinheit (2) drehbar gedreht werden kann.

2. Vorrichtung nach Anspruch 1, **dadurch gekennzeichnet, dass** die Spiegelanordnung (4) an der Achse (7) der zweiten Antriebseinheit (3) befestigt ist.

3. Vorrichtung nach einem der Ansprüche 1 bis 2, **dadurch gekennzeichnet, dass** eine schnelle Strahlablenkung mit der zweiten Antriebseinheit (3) erfolgt.

4. Vorrichtung nach einem der Ansprüche 1 bis 3, wobei die erste Antriebseinheit (2) ein Galvanometer oder ein Schrittmotor ist, ist **dadurch gekennzeichnet, dass** eine langsame Strahlablenkung mit der ersten Antriebseinheit (2) erfolgt.

5. Vorrichtung nach Anspruch 4, **dadurch gekennzeichnet, dass** beim Betrieb der ersten Antriebseinheit (2) die Achse (7) der zweiten Antriebseinheit (3) drehfest ist.

6. Vorrichtung nach einem der Ansprüche 1 bis 5, wobei die erste Antriebseinheit (2) ein Galvanometer oder ein Schrittmotor ist, ist **dadurch gekennzeichnet, dass** ein Strahlablenkungs-Offset mit der ersten Antriebseinheit (2) einstellbar ist.

7. Vorrichtung nach einem der Ansprüche 1 bis 6, **dadurch gekennzeichnet, dass** zur Ablenkung des Lichtstrahls in einer weiteren Ablenkrichtung der Spiegelanordnung (4) eine zweite Spiegelanordnung (8) vor- oder nachgeordnet ist, die mit einem zweiten Drehantrieb (9) alternierend drehbar ist.

8. Vorrichtung nach Anspruch 7, **gekennzeichnet durch** einen zweiten Drehantrieb (9) mit den Merkmalen nach einem der Ansprüche 1 bis 12.

9. Vorrichtung nach einem der Ansprüche 7 bis 8, **dadurch gekennzeichnet, dass** die Ablenkrichtung der einen Speigelanordnung (4) im wesentlichen senkrecht zur Ablenkrichtung der zweiten Speigelanordnung (8) steht.

10. Vorrichtung nach einem der Ansprüche 7 bis 8, **dadurch gekennzeichnet, dass** die erste und/oder die zweite Spiegelanordnung (4, 8) jeweils eine langsame und/oder eine schnelle Strahlablenkung ausführt.

11. Vorrichtung nach einem der Ansprüche 1 bis 10, **dadurch gekennzeichnet, dass** eine schnelle Strahlablenkung im Bereich von 100 Hz bis 10000 Hz liegt.

12. Vorrichtung nach einem der Ansprüche 1 bis 10, **dadurch gekennzeichnet, dass** eine langsame Strahlablenkung im Bereich von 0,1 Hz bis 800 Hz liegt.

13. Vorrichtung nach einem der Ansprüche 1 bis 10, **dadurch gekennzeichnet, dass** eine oder beide Spiegelanordnungen mindestens zwei Spiegel aufweist, die in einer gemeinsamen Halterung aufgenommen sind.

## Claims

1. Apparatus for beam deflection, in particular for scanning microscopy, wherein a light beam can be deflected by a mirror arrangement (4) which can rotate in an alternating fashion by way of a rotary drive (1), **characterized in that** the rotary drive (1) comprises two independent drive units (2, 3) which rotate the mirror arrangement (4) together or independently of one another about a rotary axis (5), and **in that** the second drive unit (3) is fastened to the shaft (6) of the first drive unit (2) such that the second drive unit (3) can be rotated by the first drive unit (2).

2. Apparatus according to Claim 1, **characterized in that** the mirror arrangement (4) is fastened to the shaft (7) of the second drive unit (3).

3. Apparatus according to either of Claims 1 and 2, **characterized in that** fast beam deflection is effected by way of the second drive unit (3).

4. Apparatus according to one of Claims 1 to 3, wherein the first drive unit (2) is a galvanometer or a stepped motor, **characterized in that** slow beam deflection is effected by way of the first drive unit (2).

5. Apparatus according to Claim 4, **characterized in that** the shaft (7) of the second drive unit (3) is rotationally fixed during operation of the first drive unit (2).

6. Apparatus according to one of Claims 1 to 5, wherein the first drive unit (2) is a galvanometer or a stepped motor, **characterized in that** a beam deflection offset can be adjusted using the first drive unit (2).

7. Apparatus according to one of Claims 1 to 6, **characterized in that** a second mirror arrangement (8), which can rotate in an alternating fashion by way of a second rotary drive (9), is arranged upstream or downstream of the mirror arrangement (4) in order to deflect the light beam in a further deflection direction.

8. Apparatus according to Claim 7, **characterized by** a second drive unit (9) with the features according to one of Claims 1 to 12.

9. Apparatus according to either of Claims 7 and 8, **characterized in that** the deflection direction of one mirror arrangement (4) is substantially perpendicular to the deflection direction of the second mirror arrangement (8).

10. Apparatus according to either of Claims 7 and 8, **characterized in that** the first and/or the second mirror arrangement(s) (4, 8) respectively effect(s) slow and/or quick beam deflection.

11. Apparatus according to one of Claims 1 to 10, **characterized in that** quick beam deflection lies within the range from 100 Hz to 10,000 Hz.

12. Apparatus according to one of Claims 1 to 10, **characterized in that** slow beam deflection lies within the range from 0.1 Hz to 800 Hz.

13. Apparatus according to one of Claims 1 to 10, **characterized in that** one or both mirror arrangements have at least two mirrors which are held in a common holder.

## Revendications

1. Dispositif de déflection d'un faisceau lumineux, notamment pour la microscopie à balayage, dans lequel un faisceau lumineux peut être dévié par un agencement de miroir (4) mis en rotation en alternance par un entraînement rotatif (1),
**caractérisé en ce que** l'entraînement rotatif (1) comprend deux unités d'entraînement (2,3) indépendantes l'une de l'autre, entrant en rotation en commun ou indépendamment l'une de l'autre autour d'un axe rotatif (5) et **en ce que** la deuxième unité d'entraînement (3) est fixée sur l'axe (6) de la première unité d'entraînement (2), de telle sorte que la deuxième unité d'entraînement (3) puisse être mise en rotation par la première unité d'entraînement (2).

2. Dispositif selon la revendication 1, **caractérisé en ce que** l'agencement de miroir (4) est fixé sur l'axe (7) de la deuxième unité d'entraînement (3).

3. Dispositif selon une des revendications 1 à 2, **caractérisé en ce que** une déflection de faisceau lumineux rapide s'effectue avec la deuxième unité d'entraînement (3).

4. Dispositif selon une des revendications 1 à 3, dans lequel la première unité d'entraînement (2) est un galvanomètre ou un moteur pas à pas, **caractérisé en ce qu'**une déflection de faisceau lumineux lente s'effectue avec la première unité d'entraînement (2).

5. Dispositif selon la revendication 4, **caractérisé en ce que** lors du fonctionnement de la première unité d'entraînement (2), l'axe (7) de la deuxième unité d'entraînement (3) est solidaire en rotation.

6. Dispositif selon une des revendications 1 à 5, dans lequel la première unité d'entraînement (2) est un galvanomètre ou un moteur pas à pas, **caractérisé en ce qu'**un décalage de déflection de faisceau lumineux peut être réglé avec la première unité d'entraînement (2).

7. Dispositif selon une des revendications 1 à 6, **caractérisé en ce que** afin de dévier le faisceau lumineux dans une autre direction de déflection de l'agencement de miroir (4), un deuxième agencement de miroir (8) est disposé avant ou après, lequel peut être mis en rotation en alternance avec un deuxième entraînement rotatif (9).

8. Dispositif selon la revendication 7, **caractérisé par** un deuxième entraînement rotatif (9) présentant les caractéristiques selon une des revendications 1 à 12.

9. Dispositif selon une des revendications 7 à 8, **caractérisé en ce que** la direction de déflection du premier agencement de miroir (4) est essentiellement perpendiculaire à la direction de déflection du deuxième agencement de miroir (8).

10. Dispositif selon une des revendications 7 à 8, **caractérisé en ce que** le premier et/ou le deuxième agencement de miroir (4,8) exécute respectivement une déflection de faisceau lumineux lente et/ou rapide.

11. Dispositif selon une des revendications 1 à 10, **caractérisé en ce qu'**une déflection de faisceau lumineux rapide a lieu dans la plage comprise entre 100 Hz et 10000 Hz.

12. Dispositif selon une des revendications 1 à 10, **caractérisé en ce qu'**une déflection de faisceau lumineux lente a lieu dans la plage comprise entre 0,1 Hz et 800 Hz.

13. Dispositif selon une des revendications 1 à 10, **caractérisé en ce qu'**un ou les deux agencements de miroir présentent au moins deux miroirs, qui sont logés dans un support commun.
